# EUROPÄISCHE PATENTANMELDUNG

(11) **EP 2 338 651 A1**
(43) Veröffentlichungstag der Anmeldung: **29.06.2011**
(21) Anmeldenummer: 10012896.6
(22) Anmeldetag: 13.12.2002
(51) Int. Cl.: B25J 19/06, B25J 19/02, B25J 13/08

(54) **Einrichtung und Verfahren zum Sichern von Vorrichtungen mit frei im Raum beweglichen Teilen**

(30) Priorität: 19.12.2001 DE 10162412
(62) Teilanmeldung aus: 02027884.2
(71) Anmelder: KUKA Laboratories GmbH, 86165 Augsburg (DE)
(72) Erfinder: Heiligensetzer, Peter, 86153 Augsburg (DE); Steininger, Fritz, 75378 Bad Liebenzell (DE)
(74) Vertreter: Schlotter, Alexander Carolus Paul

(57) **Zusammenfassung**

Die Erfindung betrifft eine Sicherheitseinrichtung für Vorrichtungen (2.1) mit frei im Raum beweglichen Teilen (2.2), insbesondere für Handhabungsgeräte wie Industrieroboter oder führerlose Transportgeräte, mit Schaltmitteln, die bei Kollision der bewegten Teile mit Personen oder Gegenständen ein Steuersignal bewirken, gekennzeichnet durch ein berührungsloses Sensorsystem (1.4).

## Beschreibung

Die Erfindung betrifft zum einen eine Sicherheitseinrichtung für Vorrichtungen mit frei im Raum beweglichen Teilen, insbesondere für Handhabungsgeräte wie Industrieroboter oder führerlose Transportgeräte, mit Schaltmitteln, die bei Kollision der bewegten Teile mit Personen oder Gegenständen ein Steuersignal bewirken, durch das die bewegten Teile stillsetzbar oder ein eine der Annäherungsbewegung entgegengesetzte Bewegungsfolge bewirkendes Notlaufprogramm in Gang setzbar sind und zum anderen ein Verfahren zum Sichern derartiger Vorrichtungen mittels der erfindungsgemäßen Einrichtung.

Generell dürfen Handhabungsgeräte, insbesondere Industrieroboter nur unter eng definierten Auflagen im Beisein von Personen betrieben werden. Deshalb weisen Sicherheitseinrichtungen für den Betrieb von Vorrichtungen mit frei im Raum beweglichen Teilen, insbesondere für Industrieroboter, bislang eine strikte Trennung der Arbeitsräume von Mensch und Maschine auf. Dabei werden in der Regel trennende Schutzeinrichtungen wie z.B. Zäune verwendet.

Falls ein Zugriff zum Arbeitsraum prozessbedingt nötig ist, werden bewegliche trennende Schutzeinrichtungen (wie z.B. Schutztüren oder Klappen) oder nicht-trennende Schutzeinrichtungen (wie z.B. Laserscanner, Schaltmatten; nach Schutz-Kategorie 3 oder 4, DIN EN 954-1) verwendet, die einen Zugriff des Arbeiters in den Arbeitsraum des Roboters während des aktiven Betriebs erkennen und ein Signal liefern, das einen Alarm auslöst oder die gefahrbringende Bewegung stoppt. Auch ein Handfahrbetrieb mit Zustimmtaste unter reduzierter Geschwindigkeit gehört zum Stand der Technik.

Die erwähnten Schaltmatten nutzen die physikalischen Effekte, die bei Verkrümmung eines Lichtwellenleiters auftreten. Eine entsprechende Vorrichtung ist aus der DE 44 28 650 A1 bekannt. Bei einem in einer Kontaktmatte angeordneten Lichtwellenleiter ändert sich bereits bei geringer Druckbeanspruchung die modale Verteilung des Strahlungsfeldes, so dass ein in geeigneter Weise angeordneter Lichtdetektor Druckkräfte mit hoher Empfindlichkeit messen kann.

Die CH 682 351 A5/EP 0 264 350 beschreibt eine der zahlreichen herkömmlichen Vorrichtungen, die zur Absicherung des Arbeitsbereichs von Anlagen zum Einsatz kommen. Sie offenbart eine prozessgesteuerte Anlage mit zugeordneter Überwachungsschaltung und einem Sicherheitskreis, der insbesondere eine Zutrittsampel und eine Tür aufweist, mittels derer der Zugang zum Nahbereich des Roboters reguliert bzw. dauernd überwacht wird, so dass für den Fall, dass sich eine Bedienperson im Nahbereich aufhält, nur ein Stillstand der Anlage bzw. ein Schleichbetrieb möglich ist.

Die EP 0 725 710 B1 beschreibt eine weitere Variante, bei der eine Bedienperson eine im Raum bewegliche Vorrichtung durch das Abfahren eines Miniaturmodels des zu bearbeitenden Objektes mit einem Miniaturmodell der Vorrichtung steuert. Druckschriftgemäß ist eine Sicherheitszone um die Vorrichtung herum dadurch definiert, dass das Miniaturmodell der Vorrichtung gegenüber dem Objektmodell einen leicht vergrößerten Maßstab aufweist. Kollisionen zwischen der (realen) Vorrichtung und dem Objekt sollen so "mit absoluter Sicherheit" ausgeschlossen sein. Zusätzliche Sicherheitseinrichtungen, die etwaige Kollisionen erkennen oder verhindern könnten, sind nicht offenbart.

Derartige Schutzeinrichtungen stellen einerseits einen erheblichen Kostenfaktor dar, zum anderen ist der Inbetriebnahme-Aufwand erheblich.

Die EP 0 012 383 offenbart eine Anlage mit beweglichen Teilen, die mit einer zwischen zwei Elektrodenschichten flächenhaft auf den bewegten Teilen der Anlage angeordneten, bei Druckbeanspruchung elektrisch leitfähigen Kunststoffschicht versehen ist. Darüber hinaus kann zwischen dem hieraus gebildeten Sensorsystem und den Anlagenteilen eine verformbare Schicht angeordnet sein.

Die EP 0 689 903 zeigt einen Roboter mit einem Überzug aus visko-elastischem Material, wobei auf der Oberfläche oder unter diesem Überzug Drucksensoren zum Erkennen von Kollisionen angeordnet sind.

Weiterhin ist ein kapazitives Sensorsystem aus der DE 40 06 119 C2 bekannt. Diese Druckschrift betrifft ein kapazitives wegaufnehmersystem mit einem von außen beeinflussbaren Kondensator, der eine aktive Elektrode, eine Masseelektrode und eine zwischen der aktiven Elektrode und der Masseelektrode angeordnete Abschirmelektrode aufweist, die auf dem gleichen elektrischen Potential wie die aktive Elektrode liegt.

Eine ähnliche Vorrichtung ist auch aus der EP 0 518 836 A1 bekannt. Die WO 86/02506 betrifft einen Näherungsgeber kapazitiver Art zum Einsatz bei Fahrstuhltüren. Auch diese Druckschrift offenbart einen kapazitiven Sensor mit Drei-Elektroden-Anordnung, der darüber hinaus eine räumlich gerichtete Nachweisempfindlichkeit besitzt.

Derartige kapazitive Sensoren messen die Kapazitätsänderung, die durch das Annähern eines Gegenstandes im elektrischen Feld des durch den Sensor gebildeten Kondensators hervorgerufen wird. Kapazitive Sensoren detektieren neben allen elektrisch gut leitfähigen Materialien nur solche Materialien, deren Permittivität ausreichend groß ist.

Die Tatsache, dass ein kapazitives Sensorsystem nicht alle Arten von Materialien detektieren kann, ist gerade im Hinblick auf eine Verwendung als Sicherheitseinrichtung bei schnell bewegten Vorrichtungen mit massiven, frei im Raum bewegten Teilen als nachteilig anzusehen.

In diesem Zusammenhang ist ein Komplettsystem wünschengwert, das eine sichere Kooperation Mensch-Maschine ermöglicht.

Der Erfindung liegt die Aufgabe zugrunde, eine Sicherheitseinrichtung für den Betrieb von Vorrichtungen mit frei im Raum beweglichen Teilen zu schaffen, die den sicheren Betrieb solcher Vorrichtungen ohne aufwändige Peripherie-Einrichtungen ermöglicht und die darüber hinaus gewährleistet, dass Kollisionen zwischen Vorrichtungsteilen und Menschen oder Gegenständen frühzeitig und zuverlässig erkannt werden, so dass neben einer Vermeidung von Planungs- und Fertigungskosten ein erheblich reduzierter Platzbedarf für derartige Anlagen resultiert, so dass Mensch und Maschine zukünftig Arbeitsräume gemeinsam nutzen können.

Zur Lösung der Aufgabe sieht die Erfindung bei einer gattungsgemäßen Sicherheitseinrichtung ein taktiles Sensorsystems aus Lichtwellenleitern vor, das außerhalb eines Gehäuses der Vorrichtung auf beweglichen Teilen derselben angeordnet ist.

Die Aufgabe wird weiterhin durch ein Verfahren gelöst, bei dem bei Berührung eines beweglichen Teils der Vorrichtung eine durch auf diesem Teil angeordnete, ein taktiles Sensorsystem bildende Lichtwellenleiter geführte elektromagnetische Strahlung beeinflusst wird, wodurch mindestens eins Steuersignal zum Veranlassen mindestens einer sicherheitsrelevanten Aktion bewirkt wird.

Erfindungsgemäß werden die beim Stand der Technik erkannten Nachteile dadurch vermieden, dass ein bestimmtes taktiles Sensorsystem an den bewegten Teilen einer Vorrichtung installiert wird. Das taktile System spricht bei Berührung mit einer Person oder einem Gegenstand an. Das erfindungsgemäße taktile optische Sensorsystem mit Lichtwellenleitern läßt sich einfach an die nicht glatten Strukturen und Oberflächen bei einem Roboter anpassen. Außerdem ist hierdurch eine Sicherheit gegen elektromagnetische Störstrahlung gegeben, die zu keiner Fehlauslösung führen kann.

Das erfindungsgemäße taktile Sensorsystem, das in Form einer taktilen Haut ausgebildet ist, kann dabei direkt auf dem Gehäuse der Vorrichtung angeordnet sein. Um Beschädigungen durch mechanische Einwirkungen auszuschließen, ist nach einer bevorzugten Ausgestaltung vorgesehen, das taktile Sensorsystem nach außen durch eine stoßdämpfende teilelastische Schicht zu schützen.

Es ist erfindungsgemäß jedoch ebenfalls möglich, das taktile Sensorsystem außerhalb der das Gehäuse umgebenden stoßdämpfenden teilelastischen Schicht auf dieser anzuordnen, wodurch eine größere Nähe der Sensorik zum Gegenstand, der detektiert werden soll, erreicht wird.

Eine weitere Ausführungsform der erfindungsgemäßen Lehre sieht daher vor, dass die die Gehäuseteile bzw. die Gehäuseteile und das taktile Sensorsystem umgebende Schicht federnd und dämpfend ausgebildet ist. Durch das Federn gewinnt man Anhalteweg, damit es nicht gleich nach dem ersten Berühren zu einem harten Schlag kommt. Besitzt die Schicht Dämpfungseigenschaften, so wird Bewegungsenergie abgebaut und die wirkende Kraft bleibt über einen längeren Weg begrenzt. Dies erlaubt es dem Anwender, die Vorrichtung schneller zu fahren. Zu diesem Zweck ist vorgesehen, die stoßdämpfende teilelastische Schicht aus einem Material mit einem mechanischen Wirkungsgrad zwischen 0,5 und 0,7, insbesondere mit einem mechanischen Wirkungsgrad von 0,6 auszubilden. In einer bevorzugten Ausgestaltung der Erfindung wird hierzu ein Polyurethan-Weichschaum verwendet, der große Teile der anfallenden Bewegungsenergie absorbiert und in Wärme umwandelt.

Die erfindungsgemäße Sicherheitseinrichtung zeichnet sich insbesondere durch ihre hohe Nachweisempfindlichkeit aus, da in vorteilhafter Ausgestaltung der Erfindung vorgesehen ist, dass das aus Lichtwellenleitern gebildete taktile Sensorsystem bereits ab einer Krafteinwirkung von 0,5 bis 1,5 N, insbesondere 1 N, anspricht.

Nach einer besonders bevorzugten Ausgestaltung der erfindungsgemäßen Lehre ist ein berührungsloses Sensorsystem vorgesehen. Insbesondere in Verbindung mit dem taktilen System läßt sich so ein redundantes Gesamtsystem schaffen, das beispielsweise bei Industrierobotern den Anforderungen der Kategorie 3/4 nach der Europäischen Norm DIN EN 954-1 genügt. Hierzu umfasst die Sicherheitseinrichtung ein weiteres von dem taktilen Sensorsystem unabhängiges Sensorsystem, durch das Menschen und andere Objekte mit hoher Permittivitätszahl berührungslos detektierbar sind und durch das bereits bei Annäherung - also vor einer Kollision - ein sicherheitsrelevantes Steuersignal ausgelöst wird.

Dieses weitere unabhängige Sensorsystem ist in vorteilhafter Ausgestaltung ein kapazitives Sensorsystem mit mindestens einem aus zwei oder mehr Elektroden gebildeten Sensorelement. Zum Einsatz kommen, können insbesondere Drei-Elektroden-Systeme, die eine geerdete Elektrode, eine Sensorelektrode und eine zwischen letzteren angeordnete Schirmelektrode aufweisen. Hiermit werden Sensor-Reichweiten im Zentimeterbereich erreicht. Die Schirmelektrode ermöglicht insbesondere eine Richtwirkung des kapazitiven Sensors. Sie verringert die Streukapazitäten in Richtung Gehäuse und verbessert die Empfindlichkeit gegen Annäherung deutlich. Durch dieses zusätzliche System läßt sich die Gefahrerkennung weitgehend redundant gestalten. Auch lassen sich durch das kapazitive System Bereiche erfassen, bei denen eventuell das taktile System nicht zuverlässig anspricht. Außerdem lassen sich so Annäherungen schon im Vorfeld erfassen.

Wasser besitzt ein im Vergleich zu trockener Luft eine 81-fach erhöhte Permittivität εᵣ. Da der Mensch zu über zwei Dritteln seiner Masse aus Wasser besteht, kann er - insbesondere durch Flächenelektroden - bis zu einer Entfernung von über 10 cm zuverlässig erkannt werden.

Das aus einer Mehrzahl von Sensorelementen gebildete kapazitive Sensorsystem kann mehrere flächige Sensorelemente mit entsprechenden Flächenelektroden aufweisen. Diese Sensorelemente sind vorteilhafterweise sektorförmig unterteilt, was erlaubt, Sektoren einzeln oder gruppenweise auszublenden, sobald sich diese innerhalb einer von der Steuerung vorgesehenen erlaubten Position befinden. Damit lässt sich ein unerwünschtes Ansprechen des kapazitiven Sensorsystems für solche Fälle vermeiden, bei denen sich sicherheitsrelevante Bauteile erlaubterweise aufeinander zubewegen.

Zusätzlich hat das Aufteilen des kapazitiven Sensorsystems in Sektoren den weiteren Vorteil, dass daraus eine größere Anzahl an Elektroden resultiert, die jeweils eine kleinere Oberfläche als das Gesamtsystem aufweisen. Da die relative Kapazitätsänderung bei Annäherung ein und desselben Gegenstands mit kleiner werdender Elektrodenoberfläche ansteigt, wird die Sensorik dadurch empfindlicher, speziell gegen Annäherung kleiner Gegenstände.

Erfindungsgemäß ist weiterhin vorgesehen, die Elektroden des kapazitiven Sensorssystems asymmetrisch anzuordnen, wobei in äußerst vorteilhafter Ausgestaltung aufgebördelte Schirmelektroden Verwendung finden. Dadurch lässt sich unter Ausnutzung der Richtwirkung der einzelnen kapazitiven Sensorelemente erreichen, dass zumindest die bewegten Teile der Vorrichtung in ein geschlossenes Sensorfeld gehüllt sind.

Die Richtwirkung der einzelnen Sensorelemente lässt sich vorteilhafterweise auch dazu einsetzen, die unerwünschte Detektion von internen und externen elektromagnetischen Störquellen und die Detektion von maschinenseitigen Metallteilen oder von Teilen mit hoher Permittivitätszahl εᵣ zu unterdrücken.

In einer bevorzugten Ausgestaltung ist vorgesehen, zumindest Teile des kapazitiven Sensorsystems außerhalb des Gehäuses anzuordnen. Dies kann entweder direkt auf der Außenfläche des Gehäuses oder sogar auf der dämpfenden Schaumschicht geschehen. Dadurch lässt sich neben einer größeren Nähe zum zu detektierenden Gegenstand insbesondere auch ein größerer Abstand zu internen Störquellen, z.B. zur Leistungselektronik der Motoren, erreichen.

Es ist jedoch auch denkbar, Bestandteile des kapazitiven Sensorsystems innerhalb des Gehäuses der Vorrichtung anzuordnen. Dies ist insbesondere dann von Vorteil, wenn sich sicherheitsrelevante Bauteile der Vorrichtung sehr eng aneinander vorbeibewegen, wodurch aus Platzgründen die Montage jedweder Sensorsysteme auf der Oberfläche des Gehäuses ausgeschlossen ist. Im Zuge einer solchen Ausgestaltung ist das Gehäuse vorteilhafterweise aus einem Material mit niedriger Permittivitätszahl ausgebildet, was insbesondere durch die Verwendung von Kunststoff geschehen kann.

Nach einer weiteren bevorzugten Ausgestaltung der erfindungsgemäßen Lehre erfolgt die Anordnung des taktilen Sensorsystems, des kapazitiven Sensorsystems und der stoßdämpfenden teilelastischen Schicht in Form von jeweils lokal zum Gehäuse planparallelen Schichten, deren Abfolge auch bezüglich des Gehäuses beliebig variieren kann.

Vorteilhafterweise greifen die beiden unabhängigen Sensorsysteme, d.h. das taktile Sensorsystem und das kapazitive Sensorsystem, direkt in den NOT-AUS-Kreis der Vorrichtung ein. Darüber hinaus sind die gegebenenfalls bewirkten Steuersignale der beiden Sensorsysteme bevorzugterweise im Sinne einer logischen ODER-Verknüpfung verknüpft, d.h. es wird eine sicherheitsrelevante Aktion - beispielsweise ein Stillsetzen der Vorrichtung, ein Einleiten einer der Kollisionsbewegung entgegengesetzten Bewegungsfolge und/oder ein Auslösen eines optischen und/oder akustischen Alarms - veranlasst, wenn eines der beiden ODER beide Steuersignale bewirkt wurden.

Eine äußerst vorteilhafte Ausgestaltung der Erfindung sieht vor, dass alle Sensorflächen durch Abfahren eines Sicherheitsprogramms, insbesondere durch Annähern eines Probekörpers im Zuge einer Kontrollfahrt, sich zyklisch selbst kontrollieren.

Nach der erfindungsgemäßen Lehre ist es weiterhin möglich, das taktile und das kapazitive Sensorsystem mit einem dritten System, das als Motorstrom-Überwachungssystem zur Überwachung von Motorströmen in den in der Vorrichtung zum Bewegen der bewegten Teile vorhandenen Elektromotoren ausgebildet ist, zu kombinieren. Ein solches Motorstrom-Überwachungssystem registriert den Anstieg der Motorströme über den im kollisionsfreien Normalfall zu erwartenden Wert und löst in diesem Fall ein Steuersignal aus, durch das die gefahrbringende Bewegung gestoppt oder eine Gegenbewegung eingeleitet wird.

Es ist darüber hinaus möglich, die erfindungsgemäße Sicherheitseinrichtung mit einem Kraft-Momenten-Sensor zu kombinieren, der in bevorzugter Ausgestaltung zwischen der Vorrichtung und an der Vorrichtung angeordneten Werkzeugen vorgesehen ist und mit dessen Hilfe Kollisionen über das Auftreten unerwarteter Kräfte und Momente detektierbar sind.

Die beiden letztgenannten Systeme, d.h. das Motorstrom-Überwachungssystem und der Kraft-Momenten-Sensor, ergeben zusammen ebenfalls noch einmal ein separates redundantes System, das den Sicherheitsanforderungen nach DIN EN 954-1 Kategorie 2 genügt. Nach einer bevorzugten Ausgestaltung sind auch die Steuersignale dieser beiden Sensorsysteme im Sinne einer logischen ODER-Verknüpfung miteinander verknüpft.

Erfindungsgemäß ist weiterhin vorgesehen, die Sicherheitsfunktionen dieses separaten redundanten Systems durch ein Maschinen-Programm zu überprüfen, wobei die Vorrichtung gegen einen Widerstand gefahren wird. Solange das Motorstrom-Überwachungssystem und der Kraft-Momenten-Sensor unabhängig voneinander ein Überschreiten der Normwerte feststellen, ist das Gesamtsystem noch in Ordnung.

Nach einem ersten Aspekt der vorliegenden Erfindung wird insbesondere vorgeschlagen eine

Sicherheitseinrichtung für Vorrichtungen mit frei im Raum beweglichen Teilen, insbesondere für Handhabungsgeräte wie Industrieroboter oder führerlose Transportgeräte, mit Schaltmitteln, die bei Kollision der bewegten Teile mit Personen oder Gegenständen ein Steuersignal bewirken, durch das die bewegten Teile stillsetzbar oder ein eine der Annäherungsbewegung entgegengesetzte Bewegungsfolge bewirkendes Notlaufprogramm in Gang setzbar sind, wobei ein aus Lichtwellenleitern gebildetes taktiles Sensorsystem auf beweglichen Teilen der Vorrichtung angeordnet ist.

In einer bevorzugten Ausführung ist das taktile Sensorsystem direkt auf Gehäuseteilen der Vorrichtung angeordnet.

Vorzugsweise ist das taktile Sensorsystem nach aussen durch eine stossdämpfende teilelastische Schicht gegen mechanische Einwirkungen geschützt.

In einer bevorzugten Ausführung ist das taktile Sensorsystem ausserhalb einer die Gehäuseteile umgebenden stossdämpfenden teilelastischen Schicht auf dieser angeordnet.

Vorzugsweise besteht die stossdämpfende teilelastische Schicht aus einem Material mit einem mechanischen Wirkungsgrad zwischen 0,5 und 0,7, insbesondere mit einem mechanischen Wirkungsgrad von 0,6, wobei das Material Dämpfungs- und Federeigenschaften besitzt.

Bevorzugt besteht die stossdämpfende teilelastische Schicht aus Polyurethan-Weichschaum.

Vorzugsweise spricht das taktile Sensorsystem ab einer Krafteinwirkung von 0,5 bis 1,5 N, insbesondere von 1 N an.

Nach einem zweiten Aspekt der vorliegenden Erfindung, der mit dem vorstehend erläuterten ersten Aspekt kombiniert sein kann, wird insbesondere vorgeschlagen eine

Sicherheitseinrichtung für Vorrichtungen mit frei im Raum beweglichen Teilen, insbesondere für Handhabungsgeräte wie Industrieroboter oder führerlose Transportgeräte, mit Schaltmitteln, die bei Kollision der bewegten Teile mit Personen oder Gegenständen ein Steuersignal bewirken, und mit einem berührungslosen Sensorsystem .

In einer bevorzugten Ausführung ist das, insbesondere weitere, berührungslose Sensorsystem als kapazitives Sensorsystem mit mindestens einem aus zwei oder mehr Elektroden gebildeten Sensorelement ausgebildet.

Vorzugsweise sind durch das kapazitive Sensorsystem Menschen und andere Objekte mit einer Permittivitätszahl > 30, insbesondere im Bereich von 50 detektierbar.

In einer bevorzugten Ausführung weisen die Sensorelemente jeweils drei Elektroden auf, die als geerdete Elektrode, Sensorelektrode und zwischen letzteren angeordnete Schirmelektrode ausgebildet sind.

Vorzugsweise weist das kapazitive Sensorsystem mehrere flächige Sensorelemente mit entsprechenden Flächenelektroden auf, die insbesondere sektorförmig unterteilt sein können.

In einer bevorzugten Ausführung sind die Sensorelemente einzeln oder in Gruppen, insbesondere bei einer erlaubten Annäherung sicherheitsrelevanter Bauteile , ausblendbar.

Vorzugsweise sind die Elektroden mindestens eines Sensorelementes asymmetrisch angeordnet.

In einer bevorzugten Ausführung weist mindestens ein Sensorelement eine aufgebördelte Schirmelektrode auf.

Vorzugsweise sind bei Verwendung mehrerer Sensorelemente zumindest die bewegten Teile der Vorrichtung in ein geschlossenes Sensorfeld gehüllt.

In einer bevorzugten Ausführung sind die Bestandteile eines jeweiligen Sensorelements ganz oder teilweise ausserhalb des Gehäuses der Vorrichtung oder vollständig innerhalb des Gehäuses der Vorrichtung angeordnet.

Vorzugsweise besteht das Gehäuse aus einem Material mit niedriger Permittivitätszahl, insbesondere aus Kunststoff.

In einer bevorzugten Weiterbildung des ersten und damit kombinierten zweiten Aspekts erfolgt die Anordnung des taktilen Sensorsystems , des kapazitiven Sensorsystems und einer stossdämpfenden teilelastischen Schicht in Form von jeweils lokal zum Gehäuse planparallelen Schichten, deren Abfolge auch bezüglich des Gehäuses beliebig variieren kann.

Vorzugsweise greifen die beiden unabhängigen Sensorsysteme direkt in einen NOT-AUS-Kreis der Vorrichtung ein.

In einer bevorzugten Weiterbildung des ersten und/oder zweiten Aspekts sind alle Sensorflächen durch Abfahren eines Sicherheitsprogramms, insbesondere durch Annähern eines Probekörpers im Zuge einer Kontrollfahrt, zyklisch (selbst-)kontrollierbar.

In einer bevorzugten Weiterbildung des zweiten Aspekts, insbesondere in Kombination mit dem ersten Aspekt, sind ein taktiles und das kapazitive Sensorsystem mit einem dritten System, das als Motorstrom-Überwachungssystem zur Überwachung von Motorströmen in zum Bewegen der bewegten Teile in der Vorrichtung vorhandenen Elektromotoren ausgebildet ist und durch das bei Kollision der bewegten Teile mit Personen oder Gegenständen das Steuersignal auslösbar ist, kombiniert.

In einer bevorzugten Ausführung der vorliegenden Erfindung gemäß einem der vorstehend erläuterten Aspekte, Ausführungen bzw. Weiterbildungen sind die vorhandenen Sensor- bzw. Überwachungssysteme mit mindestens einem Kraft-Momenten-Sensor kombiniert, durch den bei Kollisionen der bewegten Teile mit Personen oder Gegenständen das Steuersignal auslösbar ist.

Die Kraft-Momenten-Sensoren können insbesondere zwischen der Vorrichtung und an der Vorrichtung angeordneten Werkzeugen vorgesehen sein.

Nach dem vorstehend erläuterten ersten Aspekt der vorliegenden Erfindung wird insbesondere weiter vorgeschlagen ein

Verfahren zum Sichern von Vorrichtungen mit frei im Raum beweglichen Teilen, insbesondere für Handhabungsgeräte wie Industrieroboter oder führerlose Transportgeräte, mit Schaltmitteln, die bei Kollision der bewegten Teile mit Personen oder Gegenständen ein Steuersignal bewirken, durch das die bewegten Teile stillsetzbar oder ein eine der Annäherungsbewegung entgegengesetzte Bewegungsfolge bewirkendes Notlaufprogramm in Gang setzbar sind, wobei bei Berührung eines beweglichen Teils der Vorrichtung eine durch auf diesem Teil angeordnete, ein taktiles Sensorsystem bildende Lichtwellenleiter geführte elektromagnetische Strahlung beeinflusst wird, wodurch mindestens ein Steuersignal zum Veranlassen mindestens einer sicherheitsrelevanten Aktion bewirkt wird.

In Kombination mit dem vorstehend erläuterten zweiten Aspekt der vorliegenden Erfindung wird insbesondere eine Weiterbildung dieses Verfahrens vorgeschlagen, wobei das Annähern eines Objektes oder einer Person an ein bewegliches Teil der Vorrichtung vor einer Berührung durch ein zusätzliches berührungsloses Sensorsystem detektiert wird, wobei ein Steuersignal zum Veranlassen mindestens einer sicherheitsrelevanten Aktion bewirkt wird.

Vorzugsweise wird das Steuersignal durch eine Veränderung der Kapazität mindestens eines auf dem Teil angeordneten Kondensators, der Bestandteil eines kapazitiven Sensorsystems ist, bewirkt.

In einer bevorzugten Weiterbildung wird die sicherheitsrelevante Aktion durch das Steuersignal des taktilen Sensorsystems und das Steuersignal des kapazitiven Sensorsystems im Sinne einer logischen ODER-Verknüpfung der beiden Steuersignale veranlasst.

Vorzugsweise wird mindestens ein Bereich des kapazitiven Sensorsystems ausgeblendet, so dass trotz einer erfolgten Annäherung kein Steuersignal ausgelöst wird.

In einer bevorzugten Ausführung werden durch das kapazitive Sensorsystem Gegenstände und Personen mit einer hohen Permittivitätszahl detektiert.

Vorzugsweise werden durch das kapazitive Sensorsystem Gegenstände und Personen mit einer Permittivitätszahl ≥ 30, insbesondere im Bereich von 50, detektiert.

In einer bevorzugten Ausführung werden durch eine Richtwirkung der Elemente des kapazitiven Sensorsystems im wesentlichen keine Bestandteile der Vorrichtung selbst detektiert.

Vorzugsweise wird eine Kollision eines beweglichen Teils der Vorrichtung mit einem Objekt oder einer Person durch ein zusätzliches Motorstrom-Überwachungssystem detektiert, das nach einer Messung von Strömen in den beweglichen Teilen der Vorrichtung zugeordneten Elektromotoren und nach einem Vergleich der Messung mit theoretisch zu erwartenden Strömen bei einer bestimmten Abweichung das Steuersignal bewirkt.

In einer bevorzugten Weiterbildung wird eine Kollision durch mindestens einen zusätzlichen Kraft-Momenten-Sensor detektiert, der bei einem Auftreten unüblicher Kräfte und/oder Momente das Steuersignal bewirkt.

Die sicherheitsrelevante Aktion wird vorzugsweise durch das Steuersignal des Motorstrom-Überwachungssystems und der Kraft-Momenten-Sensorik im Sinne einer logischen ODER-Verknüpfung der beiden Steuersignale veranlasst.

In einer bevorzugten Ausführung wird bzw. werden durch das Steuersignal eine oder mehrere der folgenden sicherheitsrelevanten Aktionen ausgelöst:
a) Stillsetzen der Vorrichtung ;
b) Einleiten einer der Kollisionsbewegung entgegengesetzten Bewegungsfolge oder
c) Auslösen eines optischen und/oder akustischen Alarms

Bezüglich der verschiedenen Möglichkeiten, den Gegenstand der vorliegenden Erfindung in vorteilhafter Weise auszugestalten und weiterzubilden, sei einerseits auf die nachgeordneten Patentansprüche, andererseits auf die Erläuterung von Ausführungsbeispielen des Gegenstands anhand der Zeichnung verwiesen. In der Zeichnung zeigt:
- Fig. 1: in einer schematischen Schnittansicht ein Anordnungsbeispiel der Sensor- und Dämpfungsschichten bezüglich des Gehäuses der Vorrichtung;
- Fig. 2: in einer schematischen Darstellung eine zu überwachende Vorrichtung und die Sensoran- ordnung bei einem Ausführungsbeispiel des erfindungsgemäßen kapazitiven Sensorsy- stems;
- Fig. 3: in einem Ablaufdiagramm ein erfindungsgemä- ßes Sicherheitsprogramm zur zyklischen (Selbst-)Kontrolle aller Sensorflächen der Sicherheitseinrichtung;
- Fig. 4: in einem Ablaufdiagramm das Überwachen eines Bewegungszustandes der Vorrichtung durch das erfindungsgemäße Motorstrom- Überwachungssystem und
- Fig. 5: in einem Ablaufdiagramm die kombinierte Be- wegungsüberwachung der Vorrichtung durch das Motorstrom-Überwachungssystem und den bzw. die erfindungsgemäß vorhandenen Kraft-Momenten-Sensoren.

Figur 1 zeigt in einer schematischen Schnittansicht ein Beispiel für die mögliche Anordnung der Sensor- und Dämpfungsschichten der erfindungsgemäßen Sicherheitseinrichtung bezüglich des Gehäuses bzw. bezüglich Gehäuseteilen der Vorrichtung.

Ein Gehäuseteil 1.1 eines beweglichen Teils 2.2 der Vorrichtung 2.1, wie eines Roboterarms (Teil) eines Roboters (Vorrichtung), ist als (lokal) ebene Platte dargestellt. Oberhalb des Gehäuseteils 1.1, d.h. außerhalb der Vorrichtung 2.1 ist ein taktiles Sensorsystem 1.2 angeordnet, das beim gezeigten Ausführungsbeispiel nach außen hin durch eine stoßdämpfende teilelastische Schicht 1.3 geschützt ist. Unterhalb des Gehäuseteils 1.1, d.h. innerhalb der Vorrichtung 2.1 ist ein kapazitives Sensorsystem 1.4 vorgesehen, wobei die Anordnung des taktilen Sensorsystems 1.2, der Dämpfungsschicht 1.3 sowie des kapazitiven Sensorsystems 1.4 in bezüglich des Gehäuseteils 1.1 planparallelen übereinanderliegenden Schichten erfolgt.

Die Abfolge dieser Schichten kann bezüglich des Gehäuseteils 1.1 variieren. So ist es beispielsweise möglich, das kapazitive Sensorsystem 1.4 teilweise oder ganz außerhalb des Gehäuseteils 1.1 anzuordnen. Des Weiteren besteht die Möglichkeit, das taktile Sensorsystem 1.2 und/oder das kapazitive Sensorsystem 1.4 oder Teile davon außerhalb der Dämpfungsschicht 1.3 anzuordnen, um so den Abstand der Sensorsysteme zu einem zu detektierenden Objekt zu verringern.

Die Dämpfungsschicht 1.3 ist dabei bevorzugterweise in einem Material ausgebildet, das effektiv in der Lage ist, Bewegungsenergie durch Verformung zu dissipieren, so dass bei einer Kollision sowohl die Vorrichtung 2.1 selbst als auch der Kollisionspartner geschont wird.

Figur 2 zeigt in einer schematischen Darstellung eine zu überwachende Vorrichtung 2.1 mit frei im Raum beweglichen Teilen 2.2 und die Anordnung von Sensoren des erfindungsgemäßen kapazitiven Sensorsystems 1.4.

Die schematische Darstellung einer Vorrichtung 2.1 beinhaltet eine Mehrzahl frei im Raum beweglicher Teile 2.2. Auf einem dieser bewegten Teile 2.2 sind einzelne, sektorförmig ausgebildete Sensorelemente 2.3 des kapazitiven Sensorsystems 1.4 dargestellt. Die einzelnen Sensorelemente 2.3 sind dabei flächenhaft und mit unterschiedlicher Geometrie ausgebildet.

Durch die Aufteilung einer kapazitiven Sensorfläche in eine Vielzahl kleinerer Sektoren 2.3 steigt die Nachweisempfindlichkeit des kapazitiven Sensorsystems 1.4. Des Weiteren kann mit Hilfe einer individuell ausgebildeten Richtcharakteristik der Sektoren 2.3 eine vollständige Einhüllung zumindest der beweglichen Teile 2.2 der zu überwachenden Vorrichtung 2.1 in ein kapazitives Sensorfeld erreicht werden.

Die sektorförmige Ausbildung 2.3 des kapazitiven Sensorsystems 1.4 erlaubt darüber hinaus ein selektives Ausblenden einzelner Sektoren 2.3, so dass im Falle einer erlaubten Annäherung von beweglichen Teilen 2.2 der Vorrichtung 2.1 kein ungewolltes Steuersignal ausgelöst wird.

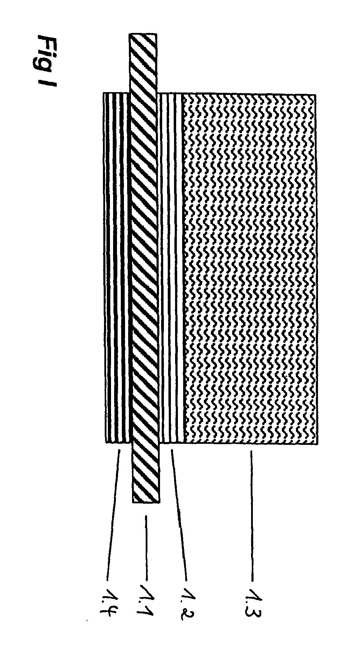

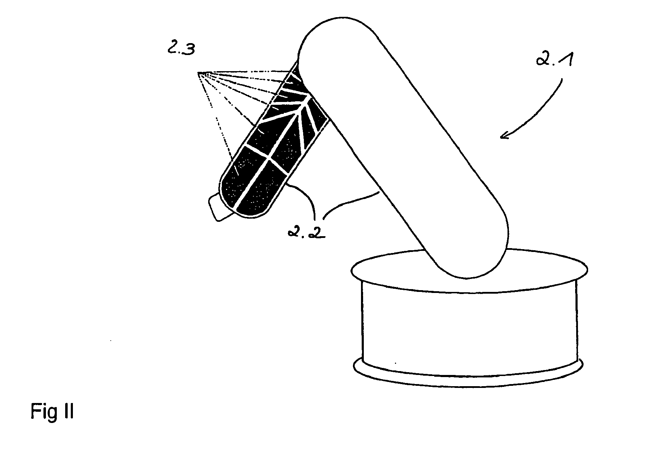

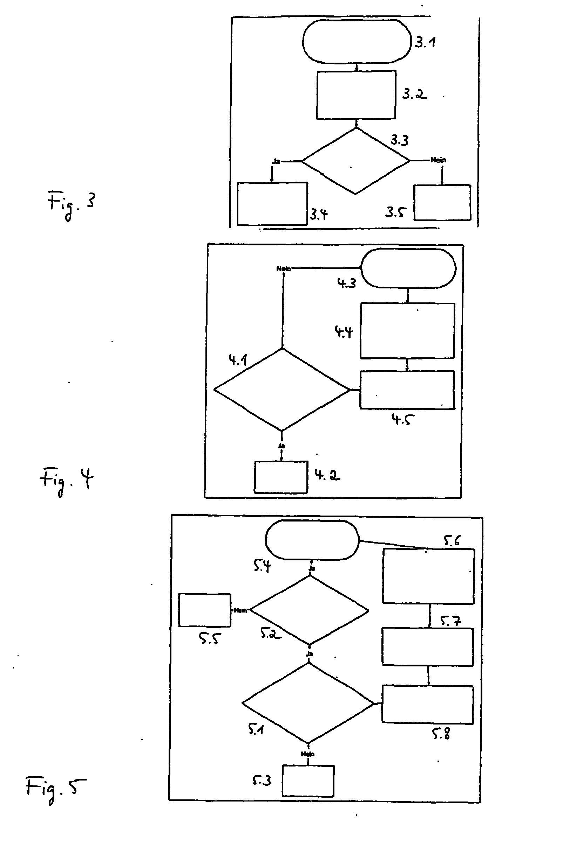

Figur 3 zeigt das Ablaufdiagramm eines erfindungsgemäßen Sicherheitsprogramms zur zyklischen (Selbst-)Kontrolle aller Sensorflächen der Sicherheitseinrichtung.

Eine Kontrolle der Sensorflächen erfolgt im Rahmen einer Kontrollfahrt, z.B. durch Annähern eines Probekörpers. Der Start dieser Kontrollfahrt erfolgt in regelmäßigen zeitlichen Abständen, z.B. alle 24 Stunden/3.1. Dabei löst die Vorrichtung 2.1 bewusst die Sicherheitsfunktion aus 3.2. Anschließend erfolgt eine Überprüfung 3.3, ob die Sicherheitseinrichtungen korrekt reagieren. Ist dies der Fall, so ist die Vorrichtung 2.1 bereit für einen Automatikbetrieb 3.4. Im Falle fehlerhaft reagierender Sicherheitseinrichtungen erfolgt eine Fehlermeldung 3.5.

Figur 4 zeigt das Ablaufdiagramm der Überwachung eines Bewegungszustands der Vorrichtung 2.1 durch das erfindungsgemäße Motorstrom-Überwachungssystem.

Hierzu erfolgt zunächst eine Messung der in der Vorrichtung real auftretenden Motorströme 4.5. Die gemessenen Motorströme zuzüglich entsprechender Toleranzen werden anschlie-Bend mit den theoretisch zu erwartenden Motorströmen verglichen 4.1, so dass im Falle einer zu großen Abweichung eine Fehlermeldung erfolgt 4.2. Ist eine solche Abweichung hier nicht gegeben, wird die Bewegung der Vorrichtung fortgeführt 4.3 und theoretisch auftretende Motorströme eines nächsten Bewegungsabschnitts werden anhand eines mathematischen Modells berechnet 4.4.

Die im Falle einer Abweichung der gemessenen Motorströme von den theoretisch zu erwartenden erfolgte Fehlermeldung 4.2 kann darüber hinaus zum Stoppen einer gefahrbringenden Bewegung oder zum Einleiten einer entsprechenden Gegenbewegung verwendet werden.

Figur 5 zeigt das Ablaufdiagramm einer kombinierten Bewegungsüberwachung der Vorrichtung 2.1 durch das in Figur 4 dargestellte Motorstrom-Überwachungssystem und eine zusätzlich vorhandene Kraft-Momenten-Sensorik.

Die kombinierte Bewegungsüberwachung umfasst eine Messung der real auftretenden Motorströme 5.7 sowie eine Messung der Kräfte und Momente an einem Endeffektor (Kraft-Momenten-Sensor) 5.8, auf deren Grundlage zunächst ein Vergleich der theoretisch erwarteten mit den gemessenen Motorströmen erfolgt 5.1. Liegt die Abweichung in einem Toleranzbereich, erfolgt anschließend eine Überprüfung der Kräfte und Momente am Endeffektor 5.2. Im Falle einer zu starken Abweichung der gemessenen von den theoretischen Motorströmen erfolgt eine Fehlermeldung 5.3. Eine entsprechende Fehlermeldung 5.5 erfolgt bei zu großen Kräften bzw. Momenten am Endeffektor 5.2. Dagegen wird die Bewegung der Vorrichtung fortgeführt 5.4, wenn sowohl die gemessenen Motorströme als auch die gemessenen Kräfte und Momente im jeweiligen Toleranzbereich liegen. Das Fortführen der Bewegung ist verbunden mit einer Berechnung der in den Motoren der Vorrichtung 2.1 zu erwartenden Motorströme anhand eines mathematischen Modells 5.6.

## Patentansprüche

1. Sicherheitseinrichtung für Vorrichtungen mit frei im Raum beweglichen Teilen, insbesondere für Handhabungsgeräte wie Industrieroboter oder führerlose Transportgeräte, mit Schaltmitteln, die bei Kollision der bewegten Teile mit Personen oder Gegenständen ein Steuersignal bewirken, **gekennzeichnet durch** ein berührungsloses Sensorsystem (1.4).

2. Sicherheitseinrichtung nach Anspruch 1, **gekennzeichnet durch** ein aus Lichtwellenleitern gebildetes taktiles Sensorsystem, das auf beweglichen Teilen (2.2) der Vorrichtung (2.1) angeordnet ist, wobei **durch** das Steuersignal die bewegten Teile stillsetzbar oder ein eine der Annäherungsbewegung entgegengesetzte Bewegungsfolge bewirkendes Notlaufprogramm in Gang setzbar sind.

3. Sicherheitseinrichtung nach Anspruch 2, **dadurch gekennzeichnet, dass** das berührungslose Sensorsystem (1.4) als kapazitives Sensorsystem mit mindestens einem aus zwei oder mehr Elektroden gebildeten Sensorelement (2.3) ausgebildet ist, und dass das taktile (1.2) und das kapazitive Sensorsystem (1.4) mit einem dritten System, das als Motorstrom-Überwachungssystem zur Überwachung von Motorströmen in zum Bewegen der bewegten Teile (2.2) in der Vorrichtung (2.1) vorhandenen Elektromotoren ausgebildet ist und durch das bei Kollision der bewegten Teile (2.2) mit Personen oder Gegenständen das Steuersignal auslösbar ist, kombiniert sind.

4. Sicherheitseinrichtung nach einem der vorangehenden Ansprüche 2 bis 3, **dadurch gekennzeichnet, dass** die Anordnung des taktilen Sensorsystems (1.2), des kapazitiven Sensorsystems (1.4) und einer stossdämpfenden teilelastischen Schicht (1.3) in Form von jeweils lokal zum Gehäuse (1.3) planparallelen Schichten erfolgt, deren Abfolge auch bezüglich des Gehäuses (1.1) beliebig variieren kann.

5. Sicherheitseinrichtung nach einem der vorangehenden Ansprüche 2 bis 4, **dadurch gekennzeichnet, dass** die beiden unabhängigen Sensorsysteme (1.2, 1.4) direkt in einen NOT-AUS-Kreis der Vorrichtung (2.1) eingreifen.

6. Sicherheitseinrichtung nach einem der vorangehenden Ansprüche, **dadurch gekennzeichnet, dass** die vorhandenen Sensor- bzw. Überwachungssysteme mit mindestens einem, insbesondere zwischen der Vorrichtung (2.1) und an der Vorrichtung (2.1) angeordneten Werkzeugen vorgesehenen, Kraft-Momenten-Sensor kombiniert sind, durch den bei Kollisionen der bewegten Teile (2.2) mit Personen oder Gegenständen das Steuersignal auslösbar ist.

7. Sicherheitseinrichtung nach einem der vorangehenden Ansprüche, **dadurch gekennzeichnet, dass** alle Sensorflächen (2.3) durch Abfahren eines Sicherheitsprogramms, insbesondere durch Annähern eines Probekörpers im Zuge einer Kontrollfahrt, zyklisch (selbst-)kontrollierbar sind.

8. Sicherheitseinrichtung nach einem der vorhergehenden Ansprüche, **dadurch gekennzeichnet, dass** das weitere berührungslose Sensorsystem (1.4) als kapazitives Sensorsystem mit mindestens einem aus zwei oder mehr Elektroden gebildeten Sensorelement (2.3) ausgebildet ist, wobei durch das kapazitive Sensorsystem Menschen und andere Objekte mit einer Permittivitätszahl > 30, insbesondere im Bereich von 50 detektierbar sind;
die Sensorelemente (2.3) jeweils drei Elektroden aufweisen, die als geerdete Elektrode, Sensorelektrode und zwischen letzteren angeordnete, insbesondere aufgebördelte, Schirmelektrode ausgebildet sind;
das kapazitive Sensorsystem (1.4) mehrere flächige, insbesondere sektorförmig unterteilte, Sensorelemente (2.3) mit entsprechenden Flächenelektroden aufweist; und/oder
die Elektroden mindestens eines Sensorelementes asymmetrisch angeordnet sind.

9. Sicherheitseinrichtung nach einem der vorhergehenden Ansprüche, **dadurch gekennzeichnet, dass** die Sensorelemente (2.3) einzeln oder in Gruppen, insbesondere bei einer erlaubten Annäherung sicherheitsrelevanter Bauteile (2.2), ausblendbar sind.

10. Sicherheitseinrichtung nach einem der vorhergehenden Ansprüche, **dadurch gekennzeichnet, dass** die Bestandteile eines jeweiligen Sensorelements ganz oder teilweise ausserhalb des Gehäuses (1.1) der Vorrichtung (2.1) oder vollständig innerhalb des Gehäuses (1.1) der Vorrichtung (2.1) angeordnet sind.

11. Sicherheitseinrichtung nach Anspruch 10, **dadurch gekennzeichnet, dass** das Gehäuse (1.1) aus einem Material mit niedriger Permittivitätszahl, insbesondere aus Kunststoff besteht.

12. Verfahren zum Sichern von Vorrichtungen (2.1) mit frei im Raum beweglichen Teilen, insbesondere für Handhabungsgeräte wie Industrieroboter oder führerlose Transportgeräte, mit Schaltmitteln, die bei Kollision der bewegten Teile mit Personen oder Gegenständen ein Steuersignal bewirken, durch das die bewegten Teile stillsetzbar oder ein eine der Annäherungsbewegung entgegengesetzte Bewegungsfolge bewirkendes Notlaufprogramm in Gang setzbar sind, **dadurch gekennzeichnet, dass** das Verfahren mit einer Sicherheitseinrichtung nach einem der vorangehenden Ansprüche ausgeführt wird.

13. Verfahren nach Anspruch 12, **dadurch gekennzeichnet, dass** bei Berührung eines beweglichen Teils (2.2) der Vorrichtung (2.1) eine durch auf diesem Teil (2.2) angeordnete, ein taktiles Sensorsystem (1.2) bildende Lichtwellenleiter geführte elektromagnetische Strahlung beeinflusst wird, wodurch mindestens ein Steuersignal zum Veranlassen mindestens einer sicherheitsrelevanten Aktion bewirkt wird, wobei das Annähern eines Objektes oder einer Person an ein bewegliches Teil (2.2) der Vorrichtung (2.1) vor einer Berührung durch ein zusätzliches berührungsloses Sensorsystem (1.4) detektiert wird, wobei ein Steuersignal zum Veranlassen mindestens einer sicherheitsrelevanten Aktion bewirkt wird.

14. Verfahren nach einem der Ansprüche 12 bis 13, **dadurch gekennzeichnet, dass** durch eine Richtwirkung der Elemente des kapazitiven Sensorsystems (1.4) im wesentlichen keine Bestandteile der Vorrichtung (2.1) selbst detektiert werden.

15. Verfahren nach einem der Ansprüche 12 bis 14, **dadurch gekennzeichnet, dass** eine Kollision eines beweglichen Teils (2.2) der Vorrichtung (2.1) mit einem Objekt oder einer Person durch ein zusätzliches Motorstrom-Überwachungssystem, das nach einer Messung von Strömen in den beweglichen Teilen (2.2) der Vorrichtung (2.1) zugeordneten Elektromotoren und nach einem Vergleich der Messung mit theoretisch zu erwartenden Strömen bei einer bestimmten Abweichung das Steuersignal bewirkt, und/oder durch mindestens einen zusätzlichen Kraft-Momenten-Sensor detektiert wird, der bei einem Auftreten unüblicher Kräfte und/oder Momente das Steuersignal bewirkt.

16. Verfahren nach einem der Ansprüche 12 bis 15, **dadurch gekennzeichnet, dass** die sicherheitsrelevante Aktion im Sinne einer logischen ODER-Verknüpfung der beiden Steuersignale.durch das Steuersignal des Motorstrom-Überwachungssystems und der Kraft-Momenten-Sensorik und/oder durch das Steuersignal des taktilen Sensorsystems (1.2) und das Steuersignal des kapazitiven Sensorsystems (1.4) veranlasst wird.
